# EUROPÄISCHE PATENTSCHRIFT

(11) **EP 2 126 545 B1**
(45) Veröffentlichungstag und Bekanntmachung des Hinweises auf die Patenterteilung: **16.01.2013**
(21) Anmeldenummer: 08716070.1
(22) Anmeldetag: 27.02.2008
(51) Int. Cl.: G01N 15/02, G01N 29/22, G01N 29/02, G01N 5/02

(54) **VORRICHTUNG ZUR MESSUNG VON FEINSTPARTIKELMASSEN**
DEVICE FOR MEASURING SUPERFINE PARTICLE MASSES
DISPOSITIF POUR MESURER DES MASSES DE PARTICULES FINES

(30) Priorität: 23.03.2007 DE 102007013938
(43) Veröffentlichungstag der Anmeldung: 02.12.2009
(73) Patentinhaber: Karlsruher Institut für Technologie, 76131 Karlsruhe (DE)
(72) Erfinder: PAUR, Hanns-Rudolf, 76139 Karlsruhe (DE); WÄSCHER, Thomas, 69123 Heidelberg (DE); MÜLHOPT, Sonja, 76137 Karlsruhe (DE)
(86) Internationale Anmeldenummer: PCT/EP2008/001535
(87) Internationale Veröffentlichungsnummer: WO 2008/116540

(56) Entgegenhaltungen:
- EP-A- 1 174 496
- WO-A-02/41973
- WO-A-03/076599
- DE-A1- 10 061 976
- DE-A1- 19 801 763
- US-A- 3 561 253

## Beschreibung

Die Erfindung betrifft eine Vorrichtung zur Messung von Feinstpartikelmassen, beispielsweise auf einem Bioassay gemäß des ersten Patentanspruchs.

Vorrichtungen der eingangs genannten Art dienen der Erfassung und/oder Analyse von Immissionen aus Aerosolen oder Stäuben allgemein. Zunächst interessieren dabei die rein physikalischen Ablagerungskinetiken auf bestimmten Oberflächen (Depositionsflächen) durch Adsorption. Dabei können die Feinstpartikelmassen auch in die Oberfläche eindiffundieren, d.h. im Rahmen eines physikalischen Diffusionsprozess aufgenommen und eingelagert werden (Absorption). Auch chemische und physikalische Wechselwirkungen der Feinstpartikel auf oder in den Depositionsflächen lassen sich anhand dieser Vorrichtungen erfassen und durch zusätzliche morphologische, physikalische oder chemische Analysemethoden bekannter Art quantivfizieren.

Ein wichtiges Einsatzfeld der vorgenannten Vorrichtungen sind auch In-Vitro-Analysen von Feinststaubablagerungen oder biochemischer oder biophysikalischer Wechselwirkungen auf Bioassays, d.h. auf biologischen oder biologisch aktiver Oberflächen. Insbesondere für eine toxikologische Bewertung von atmosphärischen Staub- und Schadstoffbelastungen beispielsweise an belasteten Arbeitsplätzen, im Verkehr oder in Industrieanlagen stellen derartige Analyen eine sinnvolle und aus ethischen Erwägungen zu bevorzugende Ergänzung zu epidemiologische Untersuchungen (mit statistischen Daten) oder in-vivo-Analysen an lebenden Individuen (z.B. mit Tierversuchen) dar.

Einer besonderen Bedeutung kommt die Immissionsanalyse bei sog. Feinstpartikelbelastungen zu. Als Feinstpartikel, auch Nanoteilchen oder Nanopartikel genannt, bezeichnet man Partikel mit Durchmessern im Submikrometerbereich, d.h. von wenigen Nanometern bis maximal einem Mikrometer. Mit einem sehr großen Verhältnis von Oberfläche zu Masse weisen Feinstpartikel gegenüber größeren Partikeln oder Festkörpern oftmals ein vollkommen anderes und oftmals noch nicht vollständig untersuchtes und damit unbekanntes Eigenschaftsprofil und Reaktionsverhalten auf.

Beispielsweise ist in den vergangenen Jahren durch epidemiologische und toxikologische Untersuchungen erkannt worden, dass mit einer erhöhten Immission von derartigen Feinstpartikeln verschiedene Erkrankungen wie Herz-Kreislaufstörungen oder chronische Atemwegsbeschwerden deutlich zunehmen. Für einen umfassenden Immissionsschutz der Bevölkerung wurden daraus neue Grenzwerte abgeleitet, die drastische Maßnahmen erfordern würden und unter den momentan gegebenen technischen und wirtschaftlichen Rahmendbedingungen jedoch nicht einhaltbar sind.

Mit einer Vorrichtung der vorgenannten Art sind jedoch zielgerichtetere Analysen einer Feinstpartikelbelastung möglich, womit auch die genannten Maßnahmen gezielter und damit effizienter eingeleitet werden können. Umfassende und damit schwer umzusetzende Maßnahmen sind damit nicht mehr erforderlich.

DE 100 61 976 A1 offenbart eine Vorrichtung zur Messung:von Feinstpartikelmassen, umfassend ein Expositionssystem mit einer Messkammer mit einer Depositionsfläche für Partikel auf einem Schwingquarz mit je einer auf diese gerichtete Aerosolzuführung für die Zuführung eines Aerosols auf die Depositionsfläche.

In-Vitro-Untersuchungen zur Messung von Feinstpartikelmassen sowie deren toxikologischen Auswirkungen auf lebende Organismen nutzen oft biologische Modellstrukturen wie z.B. Zellkulturen auf einer entsprechenden Kultivierungträgerstruktur wie z.B. einer Petrischale oder bei Bakterienkulturen einem Nährboden. Die Strukturen werden als offen liegende Schicht dem Aerosol oder einer Suspension aus einem Trägerfluid (Gas bzw. Flüssigkeit) und den Feinstpartikeln ausgesetzt.

Aus der DE 198 01 763 C2 ist eine Kulturvorrichtung für die Kultivierung von Zellen oder Gewebekomponenten bekannt, bei dem die Zellkulturen auf porösen Membranen in Transwell-Einsätze gezüchtet werden. Für die vorgenannten In-Vitro-Untersuchungen wird die Nährlösung auf der oberen Seite der planen Kulturen für die Beaufschlagung mit einem Aerosol entfernt, während der Raum unterhalb der Membran zum Zwecke der Zellversorgung und der Vermeidung einer Kumulierung von toxischen Stoffwechselprodukten kontinuierlich mit frischen Nährmedium gespült wird. Das System etablierte sich unter der Marke CULTEX bereits in vielen Bereichen der Inhalationsforschung, wie z.B. zur Untersuchung von Dieselruß und Zigarettenrauch.

Auch die EP 1 174 496 A1 offenbart eine Vorrichtung zur Kultivierung biologischer Kulturen mit einem gasförmigen Fluid auf der Oberseite und einer Flüssigkeit auf der Unterseite kombiniert mit einer rechnerische Dosisbestimmung.

Die WO03/076599 A2 offenbart eine Vorrichtung zur kultivierung, umforsend sechs identische Messkammern, umfassend jeweils eine Depositionsfläche.

Die bislang bekannten In-Vitro-Untersuchungen stützen sich jedoch ausschließlich auf zeitintegrale Messungen. Die Zellkulturen werden wie auch die genannten In-Vivo-Untersuchungen intervallweise, d.h. erst nach Ablauf einer bestimmten Versuchsdauer untersucht. Schwankungen in einer Aerosolimmission und deren temporäre biochemischen Auswirkungen auf eine Zellkultur können oft nicht oder beispielsweise anhand von Einzelversuchen nur sehr ungenau nachvollzogen werden.

Daher liegt die **Aufgabe der Erfindung** darin, eine vorgenannte Vorrichtung zur Messung von Feinstpartikelmassen vorzuschlagen, die auch die Ad- oder Absorptionskinetik, als biologisches System auch die Toxi- oder Pharmakokinetik mit erfasst.

Diese Aufgabe wird durch die kennzeichnenden Merkmale in Anspruch 1 gelöst; die hierauf bezogenen Unteransprüche beinhalten vorteilhafte Ausführungsformen dieser Lösung.

Die Erfindung betrifft eine Vorrichtung zur Messung von Feinstpartikelmassen, konzipiert für Untersuchungen zur Immission von Feinstpartikeln auf Depositionsflächen, beispielsweise über Sedimentation, Diffusion, Ad- oder Absorption oder sonstige physikalische oder chemische Anbindung.

Ein wesentliches Merkmal dieser Erfindung umfasst Mittel oder Verfahrensschritte, die eine Immission der Partikel auf Depositionsflächen nicht nur integral, sondern auch zeitaufgelöst erfassen. Die abgeschiedene Menge an immitierten Partikeln wird dabei laufend und vorzugsweise auch quantitativ erfasst. Der Verlauf einer Deposition kann damit on-line überwacht werden. Der damit erzielbare Vorteil einer derartigen On-Line-Erfassung liegt nicht nur in der zeitnahen Erfassung der Partikelabscheidung auf den Depositionsflächen, sondern auch in der zeitnahen Verarbeitung dieser Abscheidungsraten als Messgrößen für versuchtechnische Steuerungsbefehle z.B. für Versuchsführungsmanipulationen, Alarmsysteme oder für ergänzende Messungen wie auch für sicherheitsrelevante Maßnahmen.

Die Vorrichtung umfasst zur Lösung der Aufgabe ein Expositionssystem mit mindestens zwei Messkammern (Expositionskammern) mit identischen Geometrien, in denen jeweils eine Depositionsfläche für Partikel mit je einer auf diese gerichtete Aerosolzuführung für die Zuführung eines Aerosols auf die Depositionsfläche vorgesehen ist.

Feinststaub oder Nanopartikel zeichnen sich durch eine große spezifische Oberfläche aus. Dies begünstigt signifikant eine starke Haftung dieser Partikel an ebene Oberflächen, wie die genannten Depositionsflächen überwiegend mittels van-der-Waals-Kräften. Weitere Haftungsmechanismen wie z.B. Verklebungen oder Oberflächenspannungseffekte können zusätzlich einwirken, treten jedoch in den Hintergrund und sind bei Feinstäuben oder Nanopartikel im vorliegenden Fall vernachlässigbar. Im Rahmen der Erfindung zeigte sich, dass diese Haftung zwischen Feinststaub und Depositionsflächen maßgeblich durch die Oberflächentopographie und nicht oder nur zu einem geringen Anteil aber durch das Oberflächenmaterial bestimmt wird. Bei einem Vergleich der Ablagerungsmengen an Feinststaub oder Nanopartikeln auf mehreren Depositionsflächen spielt folglich das Oberflächenmaterial in vorteilhafter Weise nur eine vernachlässigbare Rolle. Ein in Einzelfällen auftretender größerer Einfluss des Materials auf das Abscheideverhalten z.B. durch die vorgenannten zusätzlichen Haftungsmechanismen ist aber mit festen Korrekturfaktoren oder -funktionen zuverlässig korrelierbar. Die Erfindung weist daher mindestens zwei Messkammern mit identischen Geometrien auf, wobei diese Depositionsflächen sich in ihren Oberflächentopographien (Oberflächenbeschaffenheit) und Abmessungen identisch gleichen, aber in ihren Oberflächenmaterialien aber unterscheiden können.

In einer bevorzugten Ausführungsform, insbesondere bei den vorgenannten Einzelfällen (größere Unterschiede im Abscheidungsverhalten) sind die Depositionsflächen jedoch nicht nur geometrisch, sondern auch in ihren Oberflächenmaterialien identisch. Weiter bevorzugt weisen die Messkammern jeweils identische Aerosolzuführungen auf die Depositionsflächen, weiter bevorzugt auch identische Absaugungen auf. Dabei wird vorausgesetzt, dass jede dieser identischen Aerosolzuführung dieselbe Feinstpartikelquelle anzapft. Ziel dieser Ausgestaltungen ist eine vergleichbare und möglichst identische Ablagerungen gleicher Feinstpartikelmengen auf jeder der Depositionsflächen.

Mindestens eine der Depositionsflächen auf einem Schwingquarz ist als Feinstwaage konzipiert, wobei diese Flächen gegenüber den anderen Depositionsflächen ohne Schwingquarz keine andere abweichende Lage in der Expositionskammer einnimmt. Damit ist in vorteilhafter Weise nicht nur während einer Versuchszeitdauer eine Massenbestimmung der an die Depositonsfläche angebundenen Feinstpartikelmassen möglich, sondern aufgrund der identischen Anordnungen in den Expositionskammern und damit aufgrund einer auszugehenden Übertragbarkeit auf die anderen Expositionskammern mit identischen Geometrien auch die Abschätzung der Feinstpartikelmassen auf den übrigen Depositionsflächen.

Weisen die Expositionskammern untereinander z.B. geometrische oder strömungstechnische Unterschiede auf, ist eine grundsätzliche Übertragbarkeit der Abscheidungen dennoch gegeben. Dabei können Abweichungen der Messergebnisse und damit Messfehler sofern erforderlich, mit bevorzugt empirisch an Vergleichsversuchen ermittelten fixen Korrekturfaktoren oder variablen Korrekturfunktionen (Korrelationsbeziehungen) minimiert bzw. korrigiert werden.

Für eine weiterereichende Anpassung der Depositionsflächen hinsichtlich identischer Oberflächenschwingungszustände und damit der Abscheidedynamiken für Feinstpulvermassen werden im Rahmen einer Ausführungsform alle Depositionsflächen mit Schwingquarzen ausgestattet. Diese Form ermöglicht zudem vergleichende Massenbestimmungen auf den schwingenden Depositionsflächen und damit auch ein frühzeitiges Erkennen von fehlerhaften Expositionskammern (Qualitätsüberwachung).

Die Massenbestimmung kann dabei während der Versuchszeitdauer ununterbrochen laufend oder als eine oder mehrere Einzelmessungen erfolgen, wobei die Ansteuerung und die Datenerfassung des Schwingquarzes vorzugsweise Computergesteuert erfolgen.

Die genannten Maßnahmen ermöglichen in vorteilhafter Weise eine online-Erfassung der abgelagerten realen Feinstpartikelmassen direkt im Expositionssystem. Zusätzliche Messeinheiten werden nicht benötigt. Umrechnungsalgorithmen oder Modellbetrachtungen scheiden damit als Quellen für Ungenauigkeiten oder Fehlerquellen aus. Durch die Nutzung eines direkten Messkonzepts ist die Vorrichtung damit besonders zuverlässig, einfach aufgebaut und damit kostengünstig. Eine chemische oder radioaktive Markierung des Aerosols oder der Feinstpartikel zwecks eines quantitativen Nachweises ist nicht erforderlich.

Die Erfindung sowie Details dieser werden beispielhaft anhand von Ausführungsformen und folgenden Figuren näher erläutert. Es zeigen
**Fig.1** eine Aufsicht einer Ausführungsform mit sechs Expositionskammern,
Fig.2 eine Schnittdarstellung der Vorrichtung (gemäß Fig.1 an der mit A - A gekennzeichneten Linie) sowie
Fig.3a und b Schnittdarstellungen der in Fig.2 gezeigten Expositionskammern im Detail.

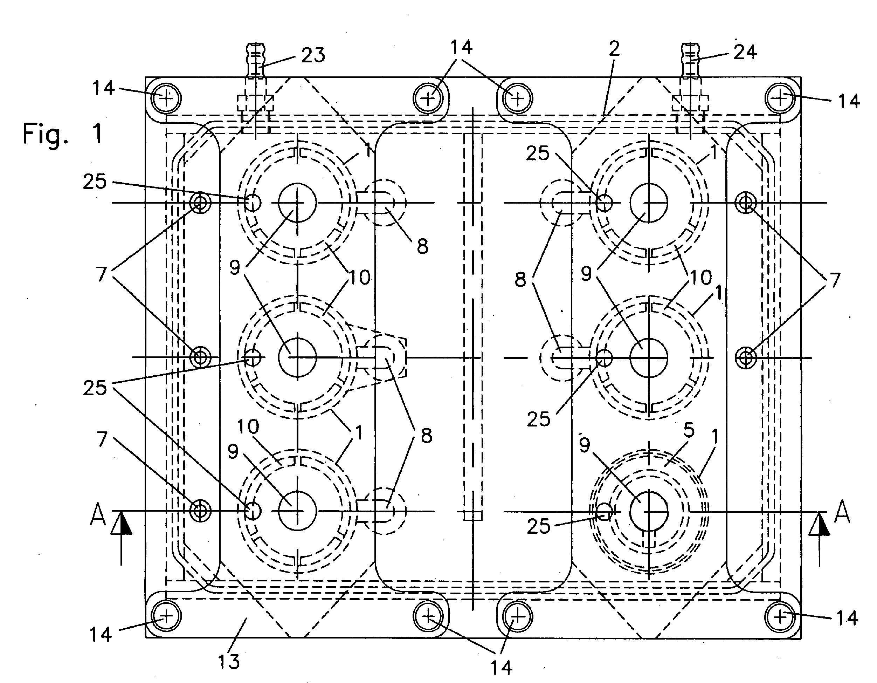

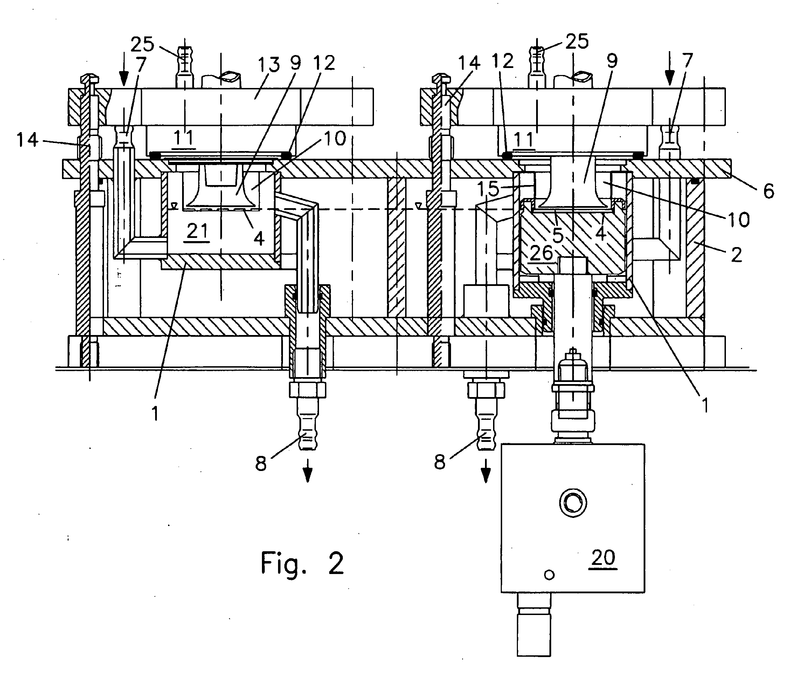

Die in den Fig.1 dargestellte Ausführungsform weist eine Anordnung von sechs Expositionskammern 1 zur Durchströmung eines Aerosols in einem gemeinsamen Gehäuse 2 auf. Die Geometrien der Durchströmungsvolumina für das Aerosol sind bei allen sechs Expositionskammern vorzugsweise identisch. Fünf der sechs Expositionskammern sind dabei mit je einem Transwelleinsatz 3 als Depositionsfläche 4 (Zellkulturoberfläche z.B. auf einer Polycarbonatmembran) ausgestattet, während in der sechsten Expositionskammer die Depositionsfläche 4 auf einen Schwingquarz 5 als Messaufnehmer einer Quarzmikrowaage angeordnet ist. Vorzugsweise wird die Depositionsfläche durch die Oberfläche oder die Elektrode des Schwingquarzes direkt gebildet. Als Quarzmikrowaage kam dabei stellvertretend für andere vergleichbare Systeme ein System des Typs QCM200 der Fa. Stanford Research Systems, Inc., Sunnyvale CA, USA zur Anwendung. Ferner findet sich in **Fig.1** eine mit A - A gekennzeichnete Linie als Schnittebene für die Darstellung gem. Fig.2.

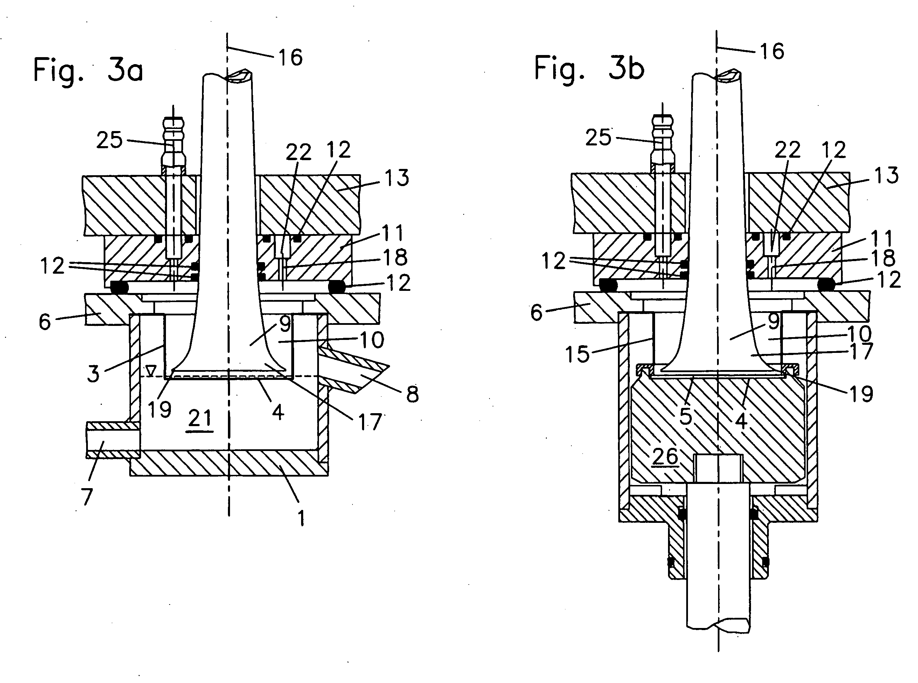

Die Schnittdarstellung gem. Fig.2 offenbart die topographische Anordnung von zwei auf der Schnittebene A - A angeordneten Expositionskammern 1, wobei die rechts angeordnete Expositionskammer mit dem vorgenannten Schwingquarz 5 auf einer zusätzlichen Masse 26 als Träger unterhalb der Depositionsfläche 4 als Quarzmikrowaage ausgestattet für die Messung von Feinstpartikelmassen konzipiert ist. Der Schwingquarz 5 ist im Ausführungsbeispiel in eine Vertiefung der Masse 26 eingesetzt und wird von nicht weiter dargestellten, in der Masse integrierten Federn von unten gegen eine Ringmutterverschraubung gedrückt. Die Federn dienen zugleich der elektrischen Kontaktierung der Elektroden des Schwingquarzes (vgl. Operation and Service Manual des System des Typs QCM50 und 100 der Fa. Stanford Research Systems, Inc., Sunnyvale CA, USA, insbes. Chapter 1.6, Figure 3, Contact Springs). Vorzugsweise sind dann Masse und Ringmutterverschraubung aus einem elektrischen Isolator wie Kunststoff, beispielsweise Teflon gefertigt.

Die Ringmutterverschraubung begrenzt gemeinsam mit einer auf dieser aufgesetzten Krause 15 geometrisch die Durchströmungsvolumina, insbesondere im Bereich des Absaugvolumens 10 in der Weise geometrisch wie in der links angeordneten Expositionskammer die seitlichen vertikalen Flanken des Transwelleinsatzes 3. Die Durchströmungsvolumina sind in jeden Fall geometrisch zueinander angepasst, werden durch Wandungen und Fluidführungen mit gleichen Topographien, vorzugsweise auch durch gleiche Materialoberflächen begrenzt und sind so weit wie irgend möglich identisch. Ein Oszillator 20 dient der Ansteuerung und der Messdatenerfassung der Quarzmikrowaage.

Die Expositonskammern sind bei der Ausführungsform von oben in Öffnungen einer Deckplatte 6 des Gehäuses 2 eingesetzt und parallel zueinander angeordnet. Sofern sie nicht mit einem Schwingquarz ausgestattet sind (vgl. Fig.3a und b), weisen sie je einen Zulauf 7 und einen Ablauf 8 für ein Nährmedium je zu einem Nährmedienvolumen 21 unterhalb der Depositonsflächen zur Versorgung der die Depositionsflächen bildenden Zellkulturen auf. Der Ablauf 8 ist in der Expositionskammer 1 so angeordnet, dass er eine Ablaufkante bildet, damit einen gleich bleibenden Füllstand des Nährmediums im Nährmedienvolumen 21 sicherstellt und damit eine Benetzung und damit Versorgung der Zellkultur von unten stets sicherstellt (vgl. auch Fig.3a).

Fig.2 zeigt allerdings je einen Zu- und einen Ablauf pro dargestellter Expositionskammer, wobei die rechts dargestellte Expositionskammer mit Schwingquarz diese nicht selbst aufweist, sondern den Zu- und Ablauf für die dahinter angeordnete Expositonskammer ohne Schwingquarz darstellt (vgl. Fig.1 und 3b).

Die Expositionskammer mit Schwingquarz weist im Ausführungsbeispiel gemäß **Fig.1** bis 3b kein Nährmedienvolumen 21 aus. Der hierfür vorgesehene Platzbedarf wird für die Anordnung der Masse 26 benötigt. Die Depositionsflächen 4 auf dem Schwingquarz 5 sind damit auch nicht von unten für ein Nährmedium zugänglich. Aus diesem Grund bestehen die Depositionsflächen auf dem Schwingquarz aus einem vorzugsweise dämpfungsarmen Material mit einer Oberflächentopographie, die der einer Zellkulturoberfläche entspricht.

Ferner münden in jede Expositionskammer 1 von oben je eine Aerosolzuführung 9 aus. Diese leiten den Aerosolstrom über die Depositonsflächen und verursacht eine lokale Immission auf diesen, vorzugsweise von der Mitte der Depositionsfläche ausgehend vorzugsweise radial gleichmäßig nach außen hin verteilt. Von der Depositionsfläche wiederum wird der Aerosolstrom von einem in den Ringkanal 22 ausmündenden Absaugvolumen 10 (vgl. Schnittdarstellung Fig.3a und b) erfasst und abgeleitet. Vorzugsweise umfasst die Absaugung ein Ringkanal 22 mit einer Aerosolabsaugung 25 sowie einer Vielzahl von Durchbrüchen (Verbindungskanäle 18) zum Absaugvolumen 10 im Deckel 11 um die Depositionsfläche zwecks radialer Absaugung des Aerosolstrom. Vorzugsweise sind Depositionsfläche, Aerosolzuführung und Absaugvolumen achsensymmetrisch gestaltet und konzentrisch zueinander angeordnet.

Die Depositionsflächen 4 aller Expositionskammern 1 erstrecken sich parallel zur Deckplatte 6 auf einer Ebene und sind nach Abheben eines Deckels 11 und der Aeorsolzuführung 9 pro Expositionskammer von oben durch die Öffnungen der Deckplatte auch zugänglich. Zur Vermeidung eines Aerosolnebenstroms sind die Expositionskammern oben über je einen Dichtring 12 zwischen Deckel 11 und Deckplatte 6 abgedichtet. Die Deckel werden über eine Anpressplatte 13 auf die Expositionskammern 1 gepresst. Die Anpressplatte wird auf in das Gehäuse 2 eingesetzte Bundbolzen 14 geführt und in der Position über nicht dargestellte Schnellverschlüsse fixiert.

Fig.3a und b geben die Schnittdarstellungen der in Fig.2 gezeigten Expositionskammern im Detail wieder.

Fig.3a zeigt eine Expositionskammer ohne Mikrowaage. Die Depositionsfläche 4 erstreckt sich auf den Bodenbereich des Transwelleinsatzes 3, der von oben in die Expositonskammer 1 eingesetzt ist und durch einen nach außen gebogenen und unter Deckel eingreifenden Becherrand zentriert und gehalten wird. Der Zulauf 7 für ein Nährmedium mündet unterhalb der Depositonsfläche (d.h. den Zellkulturen) in das Nährmedienvolumen 21 ein, benetzt dort von unten die gesamte Depositionsfläche 4 und verlässt das Volumen über den Ablauf 8. Die Feinstpartikelmassen werden als Aerosol von oben durch die mittig um die Symmetrieachse 16 angeordnete Aerosolzuführung 9 auf die Depositionsfläche 4 geleitet. Das Innere des Transwelleinsatzes 3 außerhalb des sich nach unten hin zunehmend aufweitenden Auslassbereichs 17 der Aerosolzuführung 9 bildet das ringförmig konzentrisch um diesen angeordnete Absaugvolumen 10, umfassend eine Vielzahl von konzentrisch um die Aerosolzuführung angeordneten und in das ringförmige Kanalsystem 22 ausmündenden Verbindungskanälen 18. Der Auslassbereich 17 erweitert sich dabei nach unten hin konisch oder - wie dargestellt - bevorzugt aber trompetenförmig und bildet in seinem gesamten Umfang mit der Depositionsfläche 4 einen umlaufenden Ringspalt 19 gleich bleibender Breite.

Eine Expositionskammer, ausgestattet mit einem Schwingquarz 5 als Messaufnehmer einer Quarzmikrowaage zeigt Fig.3b. Der Bereich oberhalb der Depositionsfläche 4 ist in seinem Aufbau, seinen Abmessungen und Funktionsweise identisch zu der vorgenannten und in Fig.3a gezeigten Expositonskammer ohne Mikrowaage. Die Depositionsfläche wird vorzugsweise durch die Oberfläche des Schwingquarzes 5 gebildet, der wiederum das Volumen unterhalb der Depositionsfläche ausfüllt und von unten mit dem Oszillator 20 verbunden ist (vgl. Fig.2).

Die Abscheidungseffizienz auf den Depositionsflächen lässt sich durch Mittel zur Erzeugung eines Potentialunterschieds zwischen den Partikeln im Gas und den Depositionsflächen 4 gezielt beeinflussen. Eine Möglichkeit bieten Mittel zur Ionisierung dieser Feinstpartikelmassen im Aerosol, vorzugsweise schon vor Eintritt in die Aerosolzuführung 9. Die Ionisierung erfolgt vorzugsweise elektrisch oder photonisch, in einzelnen Fällen auch radioaktiv, wobei die Ionisierung durch dem Aerosol hinzuzufügende z.B. als Ladungsüberträger wirkende Additive selektiv gesteuert oder beschleunigt werden kann. Um ein vorzeitiges Abscheiden von Feinstpartikeln z.B. in der Aerosolzuführung zu vermeiden sollte der elektrische Potentialunterschied zwischen ionisierten Feinstpartiklen im Aerosol und der Aerosolzuführung möglichst gering gehalten werden. Zur Erhöhung der Abscheidungsraten der ionisierten Partikel auf den Depositonsflächen wird dann zwischen diesen und dem Auslassbereich 17 der Aerosolführung, d.h. bevorzugt im Ringspalt 19 ein elektrisches Feld eingestellt.

Setzen sich die Feinstpartikelmassen aus mehreren unterschiedlichen Partikelfraktionen zusammen, lassen sie sich beispielsweise durch die vorgenannte selektive Ionisierung auf zwei verschiedene Weisen trennen. Einerseits lassen sich selektiv ionisierte Partikelfraktionen in einem elektrischen Feld vor Eintritt in die Vorrichtung abscheiden, andererseits lassen sich durch eine Anlegung des vorgenannten elektrischen Feldes zwischen Depositionsfläche 4 und Auslassbereich 17 eine Abscheidung der ionisierten Partikelfaktionen selektiv signifikant erhöhen.

Ebenso lassen sich die Abscheidung von Partikelfraktionen durch einen Temperaturunterschied zwischen den Partikeln im Aerosol und den Depositionsflächen 4 selektiv beeinflussen. Durch eine Erwärmung der Depositionsfläche lassen sich beispielsweise bestimmte Fraktionen auf diesen leichter verdampfen. Außerdem beeinflusst die Temperatur signifikant die Dynamik der physikalischen, chemischen und biologischen Wechselwirkungen zwischen abgeschiedenen Partikeln und Depsitionsflächen und damit die Abscheidungskinetiken einzelner Partikelfräktionen selektiv.

Alternative Mittel zur Kühlung der Depositionsfläche 4 und / oder zur Erwärmung der Partikel im Aerosol (z.B. durch eine der Aerosolzuführung 9 vorgeschalteten Vorrichtung) bewirken eine Überströmung von wärmeren Partikelmassen über eine kältere Depositionsfläche. Damit kondensieren sich bevorzugt auch gasförmige Bestandteile auf der Depositionsfläche.

Wird die Vorrichtung für die eingangs genannten In-Vitro-Analysen von Feinststaubablagerungen (Staub, Pharmazeutika, Drogen, sonst. Wirkstoffe, Sporen, Viren oder Bakterien etc.) oder biochemischer oder biophysikalischer Wechselwirkungen auf Bioassays, d.h. auf biologischen oder biologisch aktiven Oberflächen, genutzt, bestehen die Depositionsflächen bevorzugt aus einem Biofilm oder einer Zellkultur.

Für die Sicherstellung einer gleich bleibenden Temperatur z.B. 37°C für die vorgenannten In-Vitro-Analysen wie z.B. auch toxikologische Anwendungen in allen Expositionskammern ist das Gehäuse 2 über einen Zulauf und einen Ablauf für die Temperierung 23 bzw. 24 mit einem Temperiermedium, z.B. Wasser oder Öl flutbar (vgl. Fig.1). Das Temperiermedium füllt das Innenvolumen des Gehäuses aus, wobei für eine bevorzugt selektive Temperierung der Depositionsflächen (indirekt über das Nährmedium im Nährmedienvolumen 21 oder der Masse 26) der Flüssigkeitsspiegel des Temperiermediums vorzugsweise auf Höhe der Depositionsflächen eingestellt wird (vgl. gestrichelte horizontale Linie in Fig.2).

### Bezugszeichenliste

- 1: Expositionskammer
- 2: Gehäuse
- 3: Transwelleinsatz
- 4: Depositionsfläche
- 5: Schwingquarz
- 6: Deckplatte
- 7: Zulauf für Nährmedium
- 8: Ablauf für Nährmedium
- 9: Aerosolzuführung
- 10: Absaugvolumen
- 11: Deckel
- 12: Dichtring
- 13: Anpressplatte
- 14: Bundbolzen
- 15: Krause
- 16: Symmetrieachse
- 17: Auslassbereich
- 18: Verbindungskanal
- 19: Ringspalt
- 20: Oszillator
- 21: Nährmedienvolumen
- 22: Ringkanal
- 23: Zulauf für Temperierung
- 24: Ablauf für Temperierung
- 25: Aerosolabsaugung
- 26: Masse

## Patentansprüche

1. Vorrichtung zur Messung von Feinstpartikelmassen, umfassend ein Expositionssystem mit mindestens zwei Messkammern (1) mit identischen Geometrien, umfassend jeweils eine Depositionsfläche (4) für Partikel mit je einer auf diese gerichtete Aerosolzuführung (9) für die Zuführung eines Aerosols auf die Depositionsfläche, **dadurch gekennzeichnet, dass**
mindestens eine der Depositionsflächen auf einem Schwingquarz (5) als Feinstwaage und andere Depositionsflächen ohne Schwingquarz konzipiert sind.

2. Vorrichtung nach Anspruch 1, **dadurch gekennzeichnet, dass** eine Umlenkung des Aerosols über den Depositionsflächen (4) vorgesehen ist.

3. Vorrichtung nach Anspruch 1 oder 2, **dadurch gekennzeichnet, dass** ein Absaugvolumen (10) um die Aerosolzuführung (9) angeordnet ist.

4. Vorrichtung nach Anspruch 3, **dadurch gekennzeichnet, dass** die Aerosolzuführung (9) einen Auslassbereich (17) mit einem aufgeweiteten Auslassquerschnitt umfasst, dieser Auslassquerschnitt über seinen gesamten Umfang einen konstanten Abstand zur Depositionsfläche (4) aufweist und eine umlaufende Spaltdüse (19) bildet sowie die Absaugvolumen konzentrisch um die Aerosolzuführung angeordnet ist.

5. Vorrichtung nach Anspruch 4, **dadurch gekennzeichnet, dass** der Auslassbereich (17) um eine Symmetrieachse (16) rotationssymmetrisch ist und sich trompetenförmig oder konisch erweitert.

6. Vorrichtung nach einem der vorgenannten Ansprüche, **dadurch gekennzeichnet, dass** Mittel zur Erzeugung eines Potentialunterschieds zwischen den Partikeln im Gas und den Depositionsflächen (4) vorgesehen ist.

7. Vorrichtung nach Anspruch 6, **dadurch gekennzeichnet, dass** die Mittel eine der Aerosolzuführung (9) vorgeschaltete Vorrichtung zur Ionisierung der Partikel im Aerosol umfassen.

8. Vorrichtung nach einem der vorgenannten Ansprüche, **dadurch gekennzeichnet, dass** die zwischen Aerosolzuführung (9) und Depositionsfläche (4) ein elektrisches Feld generierbar ist.

9. Vorrichtung nach einem der vorgenannten Ansprüche, **dadurch gekennzeichnet, dass** Mittel zur Erzeugung eines Temperaturunterschieds zwischen den Partikeln im Gas und den Depositionsflächen (4) vorgesehen ist.

10. Vorrichtung nach Anspruch 9, **dadurch gekennzeichnet, dass** die Mittel eine Kühlung für die Depositionsfläche (4) und / oder eine der Aerosolzuführung (9) vorgeschaltete Vorrichtung zur Erwärmung der Partikel im Aerosol umfassen.

11. Vorrichtung nach einem der vorgenannten Ansprüche, **dadurch gekennzeichnet, dass** die Depositionsflächen (4), die nicht auf einem Schwingquarz (5) angeordnet sind, durch einen Biofilm oder eine Zellkultur gebildet wird.

## Claims

1. Device for measuring superfine particle masses, comprising an exposure system with at least two measurement chambers (1) with identical geometries, each comprising a deposition surface (4) for particles and each with an aerosol feed (9) directed at said surface for feeding an aerosol onto the deposition surface, **characterised in that** at least one of the deposition surfaces is designed on a quartz oscillator (5) as a superfine balance and other deposition surfaces are designed without quartz oscillators.

2. Device according to claim 1 **characterised in that** a diversion of the aerosol over the deposition surfaces (4) is provided.

3. Device according to claim 1 or 2, **characterised in that** an extraction volume (10) is arranged around the aerosol feed (9).

4. Device according to claim 3, **characterised in that** the aerosol feed (9) comprises an outlet area (17) with a widened outlet cross-section, this outlet cross-section has over its entire circumference a constant distance to the deposition surface (4) and forms a continuous slit nozzle (19), and also the extraction volume is arranged concentrically around the aerosol feed.

5. Device according to claim 4, **characterised in that** the outlet area (17) is rotationally symmetrical around an axis of symmetry (16) and extends in a trumpet shape or conically.

6. Device according to any one of the preceding claims, **characterised in that** means are provided to generate a potential difference between the particles in the gas and the deposition surfaces (4).

7. Device according to claim 6, **characterised in that** the means comprise a device upstream of the aerosol feed (9) for the ionisation of the particles in the aerosol.

8. Device according to any one of the preceding claims, **characterised in that** an electrical field can be generated between the aerosol feed (9) and the deposition surface (4).

9. Device according to any one of the preceding claims, **characterised in that** means are provided to generate a temperature difference between the particles in the gas and the deposition surfaces (4).

10. Device according to claim 9, **characterised in that** the means comprise a cooling system for the deposition surface (4) and / or a device upstream of the aerosol feed (9) to heat the particles in the aerosol.

11. Device according to any one of the preceding claims, **characterised in that** the deposition surfaces (4) which are not arranged on a quartz oscillator (5) are formed by a biofilm or a cell culture.

## Revendications

1. Dispositif de mesure de masses de très fines particules comportant un système d'exposition avec au moins deux chambres de mesure (1) ayant des géométries identiques, renfermant chacune une surface de dépôt (4) de particules et une alimentation en aérosol (9) dirigée sur celle-ci pour le transfert d'un aérosol sur cette surface de dépôt, **caractérisé en ce qu'**
au moins une des surfaces de dépôt est conçue sous la forme d'une balance très fine sur un cristal oscillateur (5) tandis que l'autre surface de dépôt est conçue sans cristal oscillateur.

2. Dispositif conforme à la revendication 1,
**caractérisé en ce qu'**
il est prévu une déviation de l'aérosol sur les surfaces de dépôt (4).

3. Dispositif conforme à la revendication 1 ou 2,
**caractérisé en ce qu'**
un volume d'aspiration (10) est disposé autour de l'introduction d'aérosol (9).

4. Dispositif conforme à la revendication 3,
**caractérisé en ce que**
l'introduction d'un aérosol (9) comporte une zone de sortie (17) avec une section de sortie élargie, cette section de sortie est sur la totalité de sa périphérie à une distance constante de la surface de dépôt (4) et forme une buse de fragmentation rotative (19), et le volume d'aspiration est monté concentriquement autour de l'introduction de l'aérosol.

5. Dispositif conforme à la revendication 4,
**caractérisé en ce que**
la zone de sortie (17) présente une symétrie de rotation autour d'un axe de symétrie (16) et s'élargit en forme de trompette ou de cône.

6. Dispositif conforme à l'une des revendications précédentes,
**caractérisé en ce qu'**
il est prévu des moyens de formation d'une différence de potentiel entre les particules dans le gaz et les surfaces de dépôt (4).

7. Dispositif conforme à la revendication 6,
**caractérisé en ce que**
les moyens comportent un dispositif d'ionisation des particules dans l'aérosol monté en amont de l'introduction de l'aérosol (9).

8. Dispositif conforme à l'une des revendications précédentes,
**caractérisé en ce qu'**
un champ électrique peut être généré entre l'introduction de l'aérosol (9) et les surfaces de dépôt (4).

9. Dispositif conforme à l'une des revendications précédentes,
**caractérisé en ce qu'**
il est prévu des moyens d'obtention d'une différence de température entre les particules dans le gaz et les surfaces de dépôt (4).

10. Dispositif conforme à la revendication 9,
**caractérisé en ce que**
les moyens comportent un refroidissement des surfaces de dépôt (4) et/ou un dispositif de chauffage des particules dans l'aérosol (9) monté en amont de l'introduction de l'aérosol.

11. Dispositif conforme à l'une des revendications précédentes,
**caractérisé en ce que**
les surfaces de dépôt (4) qui ne sont pas montées sur un cristal oscillateur (5) sont formées par un biofilm ou par une culture cellulaire.
